# EUROPEAN PATENT APPLICATION

(11) **EP 0 818 704 A2**
(43) Date of publication of application: **14.01.1998**
(21) Application number: 97305008.1
(22) Date of filing: 08.07.1997
(51) Int. Cl.: G02F 1/133, G02F 1/1335

(54) **Plasma addressed liquid crystal display panel with internal anti-reflection coating**

(30) Priority: 12.07.1996 US 21675 P
(71) Applicant: TEKTRONIX, INC., Wilsonville, Oregon 97070-1000 (US)
(72) Inventor: Ilcisin, Kevin J., Beaverton, Oregon 97007 (US); Buzak, Thomas S., Beaverton, Oregon 97007 (US); Martin, Paul C., Vancouver, Washington 98685 (US)
(74) Representative: Burke, Steven David

(57) **Abstract**

A plasma addressed liquid crystal display panel comprises a channel substrate, a cover sheet over the upper surface of the channel substrate, and a coating of anti-reflection material over the lower surface of the cover sheet and/or over the interior surfaces of the channels in the channel substrate.

## Description

### Cross Referenced to Related Applications

This application claims the benefit of U.S. Provisional Application No. 60/021,675, filed July 12, 1996.

### Background of the Invention

This invention relates to a plasma addressed liquid crystal (PALC) display panel with an internal anti-reflection coating.

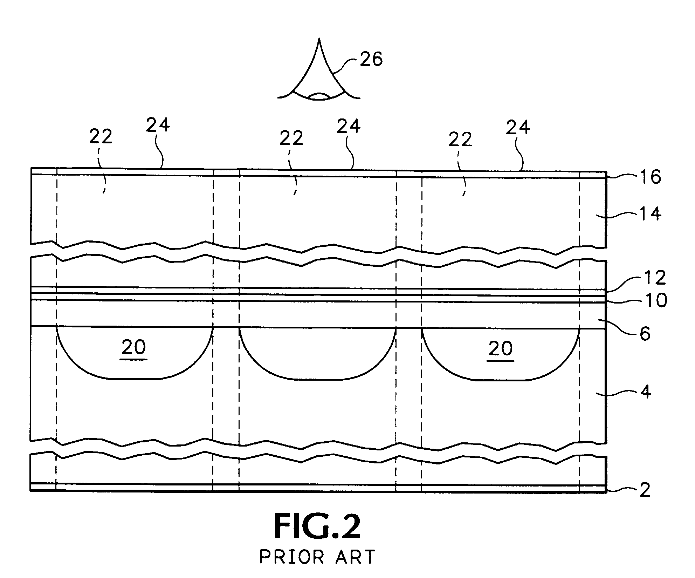

U.S. Patent 5,077,553 discloses apparatus for addressing data storage elements. A practical implementation ofthe apparatus shown in U.S. Patent 5,077,553 is illustrated schematically in FIG. 2 of the accompanying drawings.

The display panel shown in FIG. 2 comprises, in sequence from below, a polarizer 2, a channel substrate 4, a cover sheet 6 (commonly known as a microsheet), a layer 10 of electro-optic material, an array of parallel transparent data drive electrodes (only one of which, designated 12, can be seen in the view shown in FIG. 3), an upper substrate 14 carrying the data drive electrodes, and an upper polarizer 16. The channel substrate 2 is typically made of glass and is formed with multiple parallel channels 20 in its upper main face. The channels 20 are filled with an ionizable gas, such as helium. A ground electrode and a strobe electrode (not shown) are provided in each of the channels 20. The channels 20 are orthogonal to the data drive electrodes and the region where a data drive electrode crosses a channel (when viewed perpendicularly to the panel) forms a discrete panel element 22. Each panel element can be considered to be composed of elements of the electro-optic material and the upper and lower polarizers. In the case of a color display panel, the panel elements include color filters (not shown) between the layer 10 and the upper substrate 14. The region of the upper surface of the display panel that bounds the panel element constitutes a single pixel 24 of the display panel.

As explained in U.S. Patent 5,077,553, when a suitable potential difference is established between the strobe and ground electrodes in one of the channels, the gas in that channel forms a plasma that provides a conductive path at the lower surface of the cover sheet 6. If the data drive electrode is at ground potential, there is no significant electric field in the volume element of electro-optic material and the panel element is considered to be off whereas if the data drive electrode is at a substantially different potential from ground, there is a substantial electric field in that volume element of electro-optic material and the panel element is considered to be on.

It is conventional to assemble a display panel of the kind shown in FIG. 2 by forming a channel substrate assembly, including the channel substrate and the cover sheet, forming an upper substrate assembly, including the upper substrate, the data drive electrodes and the layer of electro-optic material, and attaching the upper substrate assembly to the channel substrate assembly. In manufacture of the channel substrate assembly, the cover sheet is placed over the upper surface of the channel substrate and is sealed to the channel substrate around the periphery thereof.

The channel substrate 4 and the cover sheet 6 are typically made of glass, having a refractive index of about 1.5, whereas the gaseous medium in the channels 20 has a refractive index of about 1. It can be seen that some light will pass at normal incidence through the interface between the channel substrate 4 and the channels 20 and through the interface between the channels 20 and the cover sheet 6, but there will also be some light that passes at oblique incidence through one or both of these interfaces.

When polarized light passes at oblique incidence through an interface between a first medium of refractive index n1 and a second medium of refractive index n2, it undergoes a change in polarization. For example, in the case of linearly polarized light, the plane of polarization is rotated. The change in polarization causes a reduction in contrast ratio between a pixel that is on and a pixel that is off. The degree to which the polarization changes is a function of the difference in refractive index between the first medium and the second medium and the angle between the incident light and the interface between the media.

It is well known to use an anti-reflection (A-R) coating to reduce reflection of light on a transparent surface. For example, an A-R coating may be used on the faceplate of a cathode-ray tube (CRT) to reduce reflection of ambient light toward the user. An A-R coating operates by index matching. In a simple case, an A-R coating having a refractive index of 1.38 might be applied to a CRT faceplate having a refractive index of 1.5, assuming that the refractive index of air is 1.0. In this case, the change of 0.5 in refractive index is divided into two steps. Superior performance is obtained if the A-R coating is composed of several layers, so as to divide the change in refractive index into a greater number of smaller steps. Conventional A-R coatings are made of glass or a glass-like material, such as magnesium fluoride or cryolite.

### Summary of the Invention

In accordance with a first aspect of the invention, there is provided a plasma addressed liquid crystal display panel comprising a channel substrate having an upper surface and formed with channels in its upper surface, a cover sheet over the upper surface, the cover sheet having a lower surface that is in confronting relationship with the upper surface of the channel substrate, and a coating of anti-reflection material over the lower surface of the cover sheet.

In accordance with a second aspect of the invention, there is provided a plasma addressed liquid crystal display panel comprising a channel substrate having an upper surface and formed with channels in its upper surface, each channel having an interior surface, a cover sheet over the upper surface, the cover sheet having a lower surface that is in confronting relationship with the upper surface of the channel substrate, and a coating of anti-reflection material over the respective interior surfaces of the channels.

In accordance with a third aspect of the invention, there is provided a channel substrate assembly for a plasma addressed liquid crystal display panel, said channel substrate assembly comprising a channel substrate having an upper surface and formed with channels in its upper surface, a cover sheet over the upper surface, the cover sheet having a lower surface that is in confronting relationship with the upper surface of the channel substrate, and a coating of antireflection material over the lower surface of the cover sheet.

In accordance with a fourth aspect of the invention, there is provided a channel substrate assembly for a plasma addressed liquid crystal display panel, said channel substrate assembly comprising a channel substrate having an upper surface and formed with channels in its upper surface, each channel having an interior surface, a cover sheet over the upper surface, the cover sheet having a lower surface that is in confronting relationship with the upper surface of the channel substrate, and a coating of anti-reflection material over the respective interior surfaces of the channels.

In accordance with a fifth aspect of the invention, there is provided a method of manufacturing a channel substrate assembly for a plasma addressed liquid crystal display panel, comprising (a) providing a channel substrate having an upper surface and formed with channels in its upper surface, each channel having an interior surface, (b) providing a cover sheet having a lower surface, (c) forming a coating of anti-reflection material over at least one of the lower surface of the cover sheet and the respective interior surfaces of the channels, and (d) attaching the cover sheet to the channel substrate so that the lower surface of the cover sheet is in confronting relationship with the upper surface of the channel substrate.

### Brief Description of the Drawings

For a better understanding of the invention, and to show how the same may be carried into effect, reference will now be made, by way of example, to the accompanying drawings, in which
FIGS. 1A-1C illustrate steps in manufacture of a PALC display panel in accordance with the present invention, and
FIG. 2 illustrates schematically a sectional view of a PALC display panel in accordance with the prior art.

In the several figures of the drawings, like reference numerals are used to denote corresponding elements.

Words of orientation and position, such as upper and lower, are used in this specification to establish orientation relative to the drawings and are not intended to be limiting in an absolute sense.

### Detailed Description

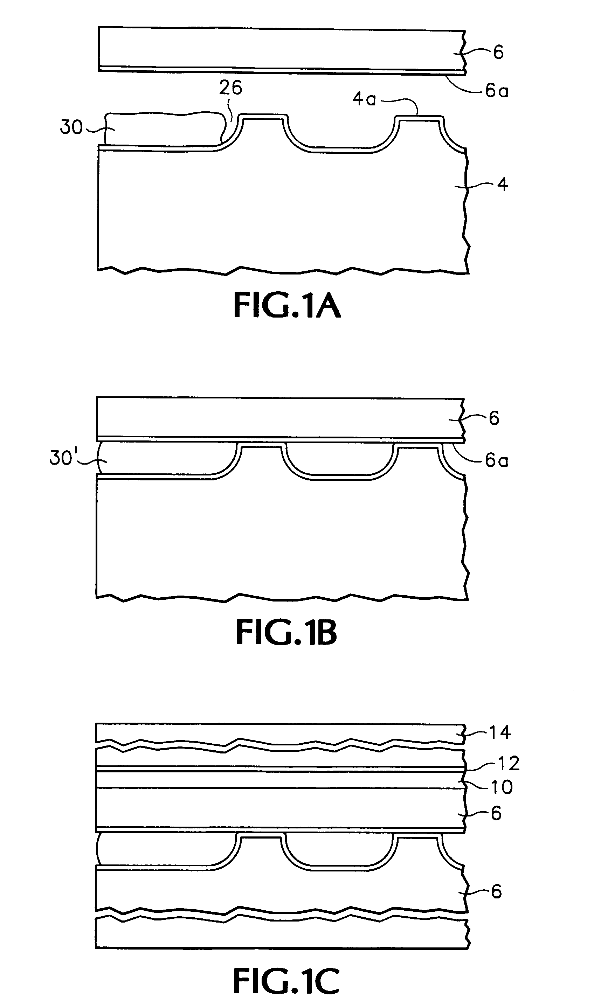

FIG. 1A illustrates the channel substrate 4 and the cover sheet 6 before they have been attached together. An A-R coating 4a has been formed over the upper surface of the channel substrate 4 and an A-R coating 6a has been formed over the lower surface of the cover sheet. The A-R coatings are made of a dielectric or glass-like material that adheres firmly to the channel substrate 4 and the cover sheet 6 so that there is no substantial danger of their separating from the channel substrate or the cover sheet, as the case may be, during subsequent processing. Numerous materials suitable for the A-R coatings 4a and 6a are commercially available, such as magnesium fluoride. Strobe and ground electrodes (not shown) are deposited in each channel. Depending on processing requirements, the strobe and ground electrodes may be deposited before or after the coating 4a has been formed. In the event that the strobe and ground electrodes are deposited before the coating 4a has been formed, the coating 4a must not cover the electrodes. This may be accomplished by spatially limiting the area to which the coating material is applied, so as to leave the ground and strobe electrodes exposed, or by applying the coating material as a continuous layer over the entire upper surface of the channel substrate and the ground and strobe electrodes and subsequently removing the coating material in accordance with a spatial pattern such that the electrodes are exposed.

At the periphery of the channel substrate is a recess or rabbet 26. A strip 30 of bonding material is accommodated in the rabbet 26. The bonding material comprises a glass frit in an organic binder. The channel substrate is pre-baked to drive off the organic binder, leaving just a strip of glass frit in the rabbet 26. The strip of glass frit stands somewhat proud of the upper surface of the channel substrate. When the cover sheet is placed in contact with the upper surface of the channel substrate, the strip of glass frit is pressed down and fills the rabbet. The channel substrate assembly is then baked at a temperature such that the frit fuses to form a glass bead 30' (FIG. 1B) that seals the cover sheet to the substrate. The channel substrate assembly is attached to the upper substrate assembly, as shown in FIG. 1C.

The channel substrate 4 and the cover sheet 6 each have a refractive index of about 1.5, whereas the coatings 4a and 6a each have a refractive index of about 1.38. By dividing the change in refractive index between the glass of the channel substrate 4 and the gaseous medium in the channel 20, and the change in refractive index between the gaseous medium in the channel 20 and the glass of the cover sheet 6, each into two smaller steps, the change in polarization that occurs when polarized light passes at oblique incidence through either interface is less than the change in polarization that occurs under similar conditions in the conventional display panel shown in FIG. 2.

Conventional anti-reflection coatings are non-scattering, and therefore they do not depolarize light passing upward through the panel from the light source, thus reducing the contrast ratio of the display.

It will be appreciated that the invention is not restricted to the particular embodiment that has been described, and that variations may be made therein without departing from the scope of the invention as defined in the appended claims and equivalents thereof. For example, the invention is not restricted to there being an A-R coating on both the lower surface of the cover sheet and the upper surface of the channel substrate, since an A-R coating on either of these surfaces would, by itself, reduce the change in polarization as compared with a conventional PALC display panel. Further, the invention is not restricted to use of an A-R coating having a single refractive index, and a coating with graded index or composed of multiple layers of different indexes may be used instead.

## Claims

1. A plasma addressed liquid crystal display panel comprising:
a channel substrate having an upper surface and formed with channels in its upper surface,
a cover sheet over the upper surface, the cover sheet having a lower surface that is in confronting relationship with the upper surface of the channel substrate, and
a coating of anti-reflection material over the lower surface of the cover sheet.

2. A display panel according to claim 1, wherein each channel has an interior surface, and the panel further comprises a coating of anti-reflection material over the respective interior surfaces of the channels.

3. A plasma addressed liquid crystal display panel comprising:
a channel substrate having an upper surface and formed with channels in its upper surface, each channel having an interior surface,
a cover sheet over the upper surface, the cover sheet having a lower surface that is in confronting relationship with the upper surface of the channel substrate, and
a coating of anti-reflection material over the respective interior surfaces of the channels.

4. A channel substrate assembly for a plasma addressed liquid crystal display panel, said channel substrate assembly comprising:
a channel substrate having an upper surface and formed with channels in its upper surface,
a cover sheet over the upper surface, the cover sheet having a lower surface that is in confronting relationship with the upper surface of the channel substrate, and
a coating of anti-reflection material over the lower surface of the cover sheet.

5. A channel substrate according to claim 4, wherein each channel has an interior surface, and the panel further comprises a coating of anti-reflection material over the respective interior surfaces of the channels.

6. A channel substrate assembly for a plasma addressed liquid crystal display panel, said channel substrate assembly comprising:
a channel substrate having an upper surface and formed with channels in its upper surface, each channel having an interior surface,
a cover sheet over the upper surface, the cover sheet having a lower surface that is in confronting relationship with the upper surface of the channel substrate, and
a coating of anti-reflection material over the respective interior surfaces of the channels.

7. A method of manufacturing a channel substrate assembly for a plasma addressed liquid crystal display panel, comprising:
(a) providing a channel substrate having an upper surface and formed with channels in its upper surface, each channel having an interior surface,
(b) providing a cover sheet having a lower surface,
(c) forming a coating of anti-reflection material over at least one of the lower surface of the cover sheet and the respective interior surfaces of the channels, and
(d) attaching the cover sheet to the channel substrate so that the lower surface of the cover sheet is in confronting relationship with the upper surface of the channel substrate.

8. A method according to claim 7, wherein step (c) comprises forming a coating of anti-reflection material over both the lower surface of the cover sheet and the respective interior surfaces of the channels.
